# EUROPÄISCHE PATENTSCHRIFT

(11) **EP 2 029 411 B1**
(45) Veröffentlichungstag und Bekanntmachung des Hinweises auf die Patenterteilung: **07.08.2013**
(21) Anmeldenummer: 07724264.2
(22) Anmeldetag: 16.04.2007
(51) Int. Cl.: B60W 10/20, B60W 50/08

(54) **ELEKTROMECHANISCHE LENKUNG MIT LENKEMPFEHLUNG**
ELECTROMECHANICAL STEERING WITH STEERING RECOMMENDATION
DIRECTION ÉLECTROMÉCANIQUE AVEC RECOMMANDATION DE BRAQUAGE

(30) Priorität: 31.05.2006 DE 102006025254
(43) Veröffentlichungstag der Anmeldung: 04.03.2009
(73) Patentinhaber: Volkswagen Aktiengesellschaft, 38440 Wolfsburg (DE)
(72) Erfinder: DREYER, Dirk, 31655 Stadthagen (DE); BROSIG, Stefan, 29386 Hankensbüttel (DE); SCHWERTMANN, Thilo, 38444 Wolfsburg (DE)
(86) Internationale Anmeldenummer: PCT/EP2007/003326
(87) Internationale Veröffentlichungsnummer: WO 2007/137651

(56) Entgegenhaltungen:
- EP-A- 1 630 071
- EP-A- 1 640 246
- EP-A2- 1 093 992
- GB-A- 2 202 501
- GB-A- 2 284 399
- US-A1- 2002 060 538

## Beschreibung

Die Erfindung bezieht sich auf eine elektromechanische Lenkung (EPS - Electric Power Steering) mit einer Lenkempfehlung zur Stabilisierung eines Fahrzeugs in einer stabilitätskritischen Fahrsituation, die am Lenkrad als Moment haptisch zur Anzeige bringbar ist, umfassend einen Motor zur Bereitstellung eines Unterstützungsmoments in Abhängigkeit eines Stellsignals, das aus einem Lenkbefehlsignal generiert wird.

Eine derartige Lenkung wird in einem Tagungsbeitrag von Fausten, M., Folke, R.: Kopplung von Bremssystemen und elektrischer Servolenkung zur Darstellung von Fahrerassistenzsystemen, vorgestellt auf der Tagung "Aktives Sicherheit durch Fahrerassistenz" der TU München vom 11. bis 12.03.2004, offenbart. Über die Lenkempfehlung, die für den Fahrer am Lenkrad als Moment wahrnehmbar ist, kann in kritischen Fahrsituationen wie beispielsweise beim Durchfahren einer Kurve oder beim Bremsen auf einer Fahrbahn mit inhomogenen Reibwerten (sogenannten µ-Split-Bremssituationen) der Fahrer durch seinen Lenkungseingriff das Fahrzeug schneller stabilisieren. Dabei wird gewährleistet, dass der Fahrer die Lenkempfehlung stets übersteuern kann und somit in jeder Fahrsituation Herr des Geschehens bleibt.

In Verbindung mit einem ESP-System (ESP - elektronisches Stabilitätsprogramm) werden für die Bereitstellung einer Lenkempfehlung am Fahrzeug keine zusätzlichen Komponenten benötigt. Vielmehr sind die am Fahrzeug aus anderen Gründen in der Regel bereits vorhanden. Dementsprechend umfasst die oben genannte Konfiguration das ESP-System mit einem Steuergerät, einer Hydraulikeinheit, einem Gierratensensor, einem Beschleunigungssensor, einem Drehzahlsensor und einem Lenkwinkelsensor sowie weiterhin die elektrische Servolenkung mit einem Steuergerät, einer Servoeinheit und einem Lenkniomentsensor. Die für die aktive Servolenkung zusätzlich benötigte Software soll dabei in eines der beiden Steuergeräte implementiert werden.

Die in einer stabilitätskritischen Fahrsituation erzeugbare Lenkempfehlung soll den Fahrer in Bezug auf die Dynamik sowie das Ausmaß des spürbaren Moments nicht überfordern, muss jedoch ausreichend deutlich wahrnehmbar sein.

Eine entsprechende Lenkung wird beispielsweise in der DE 103 54 662 A1 offenbart. Das in einer stabilitätskritischen Situation erzeugte Moment ist dabei so bemessen, dass es vom Fahrer übersteuert werden kann.

Eine weitere Lenkung der eingangs genannten Art wird in der DE 10 2004 041 413.0 beschrieben. Das für die Lenkempfehlung benötigte Signal wird in diesem Fall von dem ESP auf eine Referenzkennlinie normiert an die Lenkung übermittelt. Dieses Signal wird dann in der Lenkung in ein geeignetes Überlagerungslenkmoment übersetzt. Dazu wird das Lenkempfehlungssignal zunächst mit einem den Lenkbefehl des Fahrers repräsentierenden Signal zusammengeführt. Mit dem summarischen Signal wird dann entsprechend der Unterstützungskennlinie der Lenkung das Stellsignal für den Motor bestimmt.

Je nach Ausgestaltung der Regelung der Lenkung kann die Aufschaltung des Lenkempfehlungssignals im Regelkreis der Lenkung teilweise kompensiert werden, so dass die Lenkempfehlung am Lenkrad unter Umstände nicht ausreichend wahrgenommen wird.

Der Erfindung liegt die Aufgabe zu Grunde, die Umsetzung einer Lenkempfehlung in einer elektromechanischen Lenkung unter den Gesichtspunkten der Wahrnehmung und Dynamik zu verbessern.

Diese Aufgabe wird durch eine elektromechanische Lenkung mit Lenkempfehlung zur Stabilisierung eines Fahrzeugs gemäß Patentanspruch 1 gelöst.

Die Erfindung beruht auf der Überlegung, dass ein die Lenkempfehlung repräsentierendes Signal, welches aus erfassten Fahrzeugparametern ermittelt wird, unmittelbar auf das Stellsignal des Motors aufgeschaltet ist. Dies hat den Vorteil, dass das über den Motor erzeugte Offsetmoment für die Lenkempfehlung unabhängig von der Unterstützungskennlinie der Lenkung ist. Unter der Unterstützungskennlinie der Lenkung wird die Funktion des Unterstützungsmoments M_{U} in Abhängigkeit des Handmoments M_{H} verstanden, die in der Regel zusätzlich von der Fahrgeschwindigkeit abhängig ist. Über die Unterstützungskennlinie lässt sich, wie in der DE 10 2004 041 413.0 beschrieben, das vom Fahrer am Lenkrad aufzubringende Handmoment zur Erzeugung eines bestimmten Lenkeinschlags höher oder niedriger einstellen.

Das die Lenkempfehlung repräsentierende Signal s_{E} wird in normierter Form aus einem ESP erhalten werden. Im Unterschied zu der in der DE 10 2004 041 413.0 vorgeschlagenen Lösung wird dieses Signal unmittelbar auf das Stellsignal s_{H} des Motors aufgeschaltet. Hierdurch wird neben der Unabhängigkeit von der Abstimmung der Lenkung ein Dynamikvorteil erzielt, so dass der Impuls der Momentempfehlung sehr schnell am Motor umsetzbar ist und nicht durch die Regelung der Lenkung ausgeregelt wird. Eine sprunghafte Momentempfehlung wird somit nicht von der Lenkungsunterstützung aufgrund von Trägheiten in der Lenksäule, die oberhalb des Momentensensors ihre Ursache finden, überstimmt.

Gemäß einer vorteilhaften Ausgestaltung der Erfindung wird ein zusätzliches Offsetsignal sₒ generiert, wenn die Lenkempfehlung dem Lenkbefehl am Lenkrad entgegengewirkt. Dieses Offsetsignal sₒ wird dem Signal des Lenkbefehls s_{H} aufgeschaltet. Mit dem Offsetsignal sₒ kann zum eine Anpassung an das aktuelle Handmoment erfolgen, so dass die Lenkempfehlung für den Fahrer deutlicher spürbar wird. Zudem wird erkannt, ob der Fahrer in Bezug auf die Lenkempfehlung bereits in die richtige oder falsche Richtung lenkt. Lenkt der Fahrer in die richtige Richtung, unterbleibt ein entsprechender Hinweis am Lenkrad.

Vorzugsweise ist dieser Erkennungsmechanismus so ausgestaltet, dass ein Offsetsignal sₒ lediglich dann erzeugt wird, wenn das aktuelle Handmoment M_{H} der aktuellen Lenkempfehlung M_{E} entgegengewirkt. Lässt der Fahrer im Hands-Off-Fall das Lenkrad los, liegt kein Handmoment an, so dass auch kein Offsetsignal sₒ erzeugt wird. In diesem Fall stellt sich nur der definierte, unkritische Lenkwinkel aus dem unmittelbar auf den Motor aufgeschalteten Signal s_{E} ein.

Das Signal s_{E} der Lenkempfehlung kann hierzu beispielsweise derart eingestellt werden, dass das hieraus generierte Unterstützungsmoment M_{U} des Motors bei Geradeausfahrt an den Fahrzeugrädern eine maximale Lenkwinkelveränderung von etwa +/- 3° erzeugt.

In einer weiteren, vorteilhaften Ausgestaltung wird das Offsetsignal aus dem Lenkbefehlsignal über eine vorgegebene Zuordnungsvorschrift, insbesondere eine Kennlinie bestimmt. Hierdurch ist es möglich, die Stärke der Lenkempfehlung an die jeweilige Lenkung anzupassen, so dass das Signal für die Lenkempfehlung s_{E}, wie in der DE 10 2004 041 413.0 beschrieben, als normiertes Signal zur Verfügung gestellt werden kann. Dieses normierte.Signal kann beispielsweise über einen CAN-Bus aus einem ESP an die EPS übermittelt werden. Jedoch kann dieses Signal gegebenenfalls auch au anderer Stelle generiert und über eine geeignete Datentransfereinrichtung in die Lenkung eingespeist werden.

Zur Richtungserkennung kann beispielsweise eine Vergleichseinrichtung vorgesehen werden, welche die Vorzeichen des Lenkbefehls und der Lenkempfehlung auswertet und einen mit dem Offsetsignal multiplikativ verknüpften Faktor k generiert, der bei gleichen Vorzeichen 0, bei ungleichen Vorzeichen hingegen 1 beträgt.

Weiterhin kann eine Summationseinrichtung vorgesehen werden, der eingangsseitig das vom Fahrer vorgegebene Lenkbefehlsignal s_{H}, das beispielsweise aus dem aufgebrachten Handmoment abgeleitet wird, und das mit dem Faktor k multiplizierte Offsetsignal sₒ aufgeschaltet sind. Das Ausgangssignal der Summationseinrichtung ist dann auf eine Einrichtung zur Generierung des Stellsignals aufgeschaltet.

Nachfolgend wird die Erfindung anhand eines in der Zeichnung dargestellten Ausführungsbeispiels näher erläutert. Die Zeichnung zeigt in:
- Figur 1: eine schematische Ansicht eines Ausführungsbeispiels für eine elektromechanische Lenkung nach der Erfindung, und in
- Figur 2: eine schematische Ansicht der Bestimmung des Unterstützungsmoments der Lenkung.

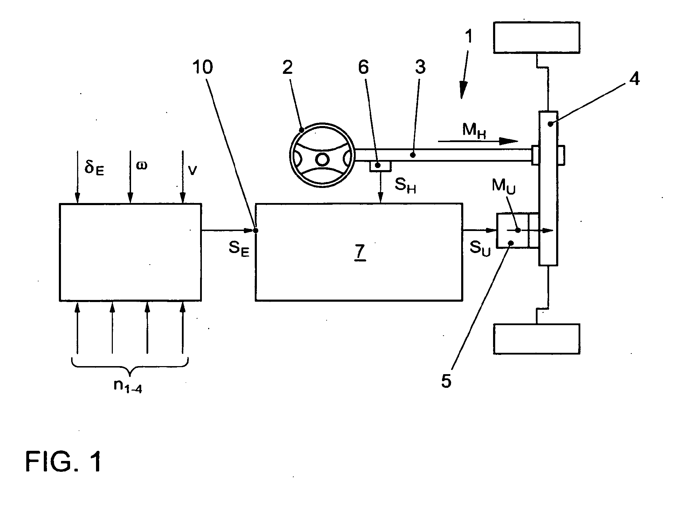

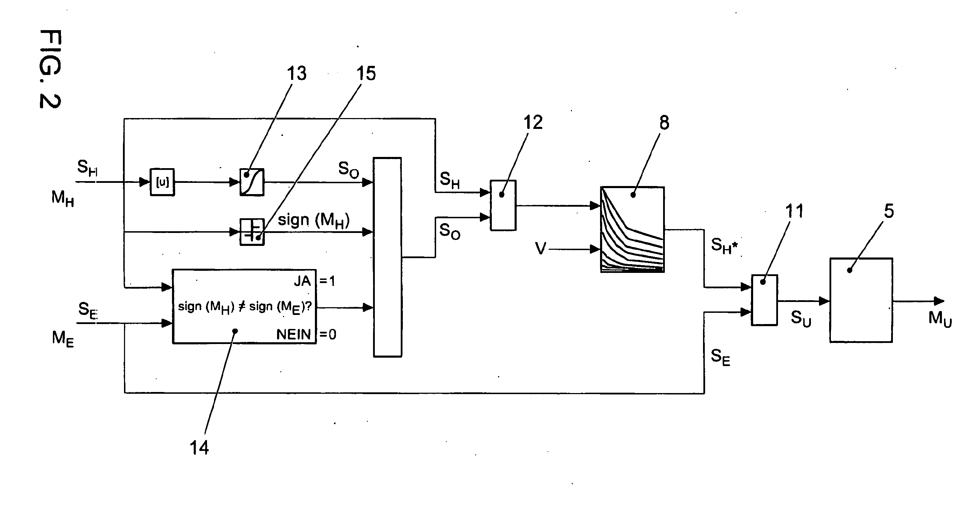

Das in den Figuren 1 und 2 dargestellte Ausführungsbeispiel bezieht sich auf eine elektromechanische Lenkung eines Personenkraftfahrzeugs. Die Lenkung 1 umfasst ein Lenkrad 2, mit dem ein vom Fahrer aufgebrachtes Lenk- bzw. Handmoment M_{H} über eine Lenksäule 3 und ein Lenkgetriebe 4 an den Fahrzeugrädern zur Wirkung gebracht werden kann. Weiterhin ist ein Motor 5 vorgesehen, über den in Abhängigkeit des Lenk- bzw. Handmoments M_{H} ein Unterstützungsmoment M_{U} erzeugt werden kann, um dem Fahrer das Lenken zu erleichtern. An der Lenkung kommen beide Momente zur Wirkung. Da die Unterstützung kontinuierlich und stetig erfolgt, ist diese am Lenkrad 2 nicht fühlbar.

Das Lenk- bzw. Handmoment M_{H} kann mit einem Drehmomentsensor 6 erfasst werden, der beispielsweise an der Lenksäule 3 angebracht ist. Mittels einer in einem Lenkungssteuergerät 7 abgelegten Zuordnungsvorschrift, die im folgenden als Unterstützungskennlinie 8 bezeichnet wird, wird zu dem jeweiligen Handmoment M_{H} ein Stellsignal s_{U} für den Motor 6 generiert. Über die Unterstützunaskennlinie, die gegebenenfalls weiterhin von der Fahrgeschwindigkeit v abhängt, lässt sich das Ausmaß der Lenkunterstützung vorgeben.

In das Steuergerät 7 der Lenkung ist ferner ein hier nicht näher dargestellter Regelkreis implementiert, mit dem das vom Fahrer vorgegebene Lenkmoment bezüglich der Servounterstützung und der Lenkwinkel geregelt werden. Hierzu können entsprechende Handmomentsensoren und Winkelsensoren z.B. an der Lenksäule 3 sowie an dem Motor 5 vorgesehen sein, deren Signale dem Steuergerät 7 übermittelt werden.

Weiterhin ist ein System zur Erzeugung einer Lenkempfehlung vorgesehen, die am Lenkrad 2 als Moment haptisch zur Anzeige bringbar ist. In einer stabilitätskritischen Fahrsituation kann so dem Fahrer ein Lenkhinweis zur Stabilisierung des Fahrzeugs vermittelt werden. Die Lenkempfehlung bzw. das über den Motor 5 am Lenkrad 2 zur Wirkung gebrachte Moment ist dabei so ausgelegt, dass dieses vom Fahrer zu jeder Zeit überstimmt werden kann. Mit der Lenkempfehlung soll folglich nicht ein gegebenenfalls erforderlicher Zusatzlenkwinkel automatisch eingestellt, sondern dem Fahrer lediglich ein Hinweis für ein in einer stabilitätskritischen Fahrsituation richtiges Verhalten gegeben werden. Zur Vorgabe der Lenkempfehlung kann auf die in der DE 10 2004 041 413.0 genannten Strategien zurückgegriffen werden.

Durch eine solche Lenkempfehlung kann beispielsweise das Eingreifen eines Antiblockiersystems und/oder eines elektronischen Stabilitätsprogramms in bestimmten Situationen vermieden oder zumindest abgeschwächt werden, wodurch sich bei einem Bremsvorgang eine größeren Fahrstabilität mit geringerer Spurabweichung sowie ein kürzerer Bremsweg verwirklichen lassen. Zudem kann durch eine entsprechende Lenkempfehlung einem zu starken Über- oder Untersteuern in der Kurve besser entgegengewirkt werden, als allein mit einem elektronischen Stabilitätsprogramm. Neben einem aus der größeren Fahrstabilität resultierenden Sicherheitsgewinn wird durch den späteren, schwächeren oder vollständigen Entfall eines ESP-Eingriffs überdies der Fahrkomfort verbessert.

Die Lenkempfehlung bzw. das diese repräsentierende Signal s_{E} wird außerhalb der Lenkung 1 anhand von erfassten Fahrzeugparametern ermittelt. Insbesondere kann die Generierung dieses Signals z. B. in ein Bremsensteuergerät 9 des Fahrzeugs oder in eine andere Recheneinrichtung implementiert sein. Für die Erkennung einer stabilitätskritischen Fahrsituation kann dabei auf die Erkennungs- und Failsafe-Algorithmen des elektronischen Stabilitätsprogramms zurückgegriffen werden, das u. a. Fahrzeugdaten wie den Lenkwinkel δ_{F}, die Gierrate ω, die Raddrehzahlen nᵢ und die Fahrgeschwindigkeit v ausließt.

Zum Datentransfer des Lenkempfehlungssignals s_{E} in die Lenkung 1 weist diese eine geeignete Schnittstelle 10 auf. Die Schnittstelle 10 ist vorzugsweise so ausgelegt, dass die für die Generierung der Lenkempfehlung benötigten Daten vom Bremsensteuergerät 9 bzw. einer externen Steuereinheit in normierter Weise an die Lenkung 1 übergeben werden. Hierdurch bleiben Modifikationen außerhalb der Lenkung 1 minimal. Die Anpassung der Lenkempfehlung an die jeweilige Lenkung 1 erfolgt vielmehr im Lenkungssteuergerät 7, wo die Haptik der Lenkempfehlung an die jeweilige Lenkungscharakteristik und Fahrsituation angepasst werden kann, wie dies nachfolgend anhand von Figur 2 näher erläutert wird.

In Figur 2 ist die Ermittlung des Stellsignals s_{U} für den Motor 5 dargestellt, mit dem ein Unterstützungsmoment M_{U} in Abhängigkeit des vom Fahrer aufgebrachten Handmoments M_{H} erzeugt wird. Wird über den Motor 5 der Lenkung 1 ein zusätzliches Moment als Lenkempfehlung erzeugt, so ist der Momentenoffset am Lenkrad 2 spürbar, sofern dieser nicht durch Systemträgheiten oder den Regelkreis der Lenkung kompensiert wird.

Um letzteres zu vermeiden und dem Fahrer in einer stabilitätskritischen Situation eine deutlich wahrnehmbare Lenkempfehlung zu vermitteln, wird nach der erfindungsgemäßen Lösung das über die Schnittstelle 10 erhaltene Lenkempfehlungssignal s_{E} unmittelbar auf den Motor 5 aufgeschaltet, um eine hohe Dynamik unabhängig von Systemträgheiten und dergleichen zu gewährleisten. Nötigenfalls wird das Lenkempfehlungssignal s_{E} in der Lenkung 1 skaliert und gefiltert.

Wie Figur 2 zeigt, werden das Lenkempfehlungssignal s_{E} sowie das durch die Unterstützungskennlinie 8 modifizierte Signal s_{H}. aus dem Handmoment M_{H} in einer Summationseinrichtung 11 addiert und das summarische Signal s_{U} dem Motor 6 zugeführt.

Das aus dem Lenkempfehlungssignal s_{E} resultierende Unterstützungsmoment M_{E} ist so klein gewählt, dass dieses die Fahrstabilität nicht beeinträchtigt. Lässt in der Fahrer das Lenkrad in einer stabilitätskritischen Situation los, so ergibt sich gegebenenfalls ein positiver Einfluss auf das Fahrverhalten, da die Lenkung ähnlich einem ESP eingreift. Dazu kann die Signaldauer begrenzt und gegebenenfalls eine Signalabschwächung vorgenommen werden. Das Signal s_{E} der Lenkempfehlung kann beispielsweise derart eingestellt sein, dass das allein hieraus generierte Unterstützungsmoment des Motors 6 bei Geradeausfahrt an den Fahrzeugrädern eine Lenkwinkelveränderung von maximal +/- 3° erzeugt.

Weiterhin wird ein Offsetsignal s_{O} generiert, um eine von der jeweiligen Lenkung 1 sowie der Fahr- und Lenksituation abhängige Lenkempfehlungskomponente zu erzeugen, die von dem Motors 6 umgesetzt wird.

In dem Lenkungssteuergerät 7 ist dazu eine Funktionalität softwaretechnisch oder hardwaretechnisch implementiert, die lediglich dann ein Offsetsignal sₒ generiert, wenn die Lenkempfehlung dem Lenkbefehl am Lenkrad 2 entgegengewirkt. Andernfalls wird das Offsetsignal sₒ zu Null gesetzt.

Auch für den Fall, dass kein Lenkbefehl vorliegt, wird das Offsetsignal sₒ zu Null, so dass eine Hands-Off-Situation erkannt wird und in diesem Fall eine Lenkempfehlung bzw. eine entsprechende Ansteuerung des Motors 5 unterbleibt.

Bei dem dargestellten Ausführungsbeispiel wird das Offsetsignal sₒ dem Signal des Lenkbefehls s_{H} aufgeschaltet. Hierzu ist in dem Lenkungssteuergerät 7 eine entsprechende Summationseinrichtung 12 vorgesehen, deren Ausgangssignal als Eingangsparameter der Unterstützungskennlinie 8 dient.

Das Offsetsignal sₒ wird aus dem das Handmoment M_{H} repräsentierenden Signal s_{H} bestimmt. Dazu wird zunächst das Handmoment M_{H} erfasst und anhand desselben mittels einer vorgegebenen Zuordnungsvorschrift 13 das Signal sₒ bestimmt. Über die Zuordnungsvorschrift 13 kann das Ausmaß der Lenkempfehlung stets so eingestellt werden, dass dieses gegenüber dem Handmoment deutlich wahrnehmbar ist.

Die Zuordnungsvorschrift 13 kann so ausgestaltet sein, dass sich bei einem fehlenden Handmoment das Signal sₒ zu Null ergibt. Hierdurch wird vermieden, dass an dem Motor 5 ein Moment für eine entsprechende Lenkempfehlungskomponente erzeugt wird.

Bei dem dargestellten Ausführungsbeispiel wird das Handmoment M_{H} betragsmäßig erfasst, während die Drehrichtung über eine geeignete Einrichtung 15 separat ausgewertet wird und als Faktor +1 oder -1 in das Offsetsignal sₒ einfließt.

In die Bestimmung des Offsetsignals sₒ kann in diesem Fall weiterhin ein Vergleich der Richtung des Handmoments M_{H} und der Richtung der Lenkempfehlung M_{E} einbezogen werden. Hierdurch ist es möglich, am Motor 5 eine Lenkempfehlungskomponente lediglich dann zu generieren, wenn der Fahrer in die falsche Richtung lenkt.

In dem Lenkungssteuergerät 7 ist dazu eine Vergleichseinrichtung 14 vorgesehen, welche die Vorzeichen des Lenkbefehls und der Lenkempfehlung mit gleicher Vorzeichenkonvention wie die Vorrichtung 15 auswertet und einen mit dem Offsetsignal sₒ multiplikativ verknüpften Faktor k generiert, der bei ungleichen Vorzeichen 1 beträgt, ansonsten jedoch zu Null gesetzt wird. Der Faktor k wird unmittelbar mit dem aus der Zuordnungsvorschrift 13 erhaltenen Offsetsignal sₒ multipliziert.

Die vorstehend beispielhaft erläuterte Fahrzeuglenkung vermeidet durch die unmittelbare Aufschaltung des Lenkempfehlungssignals s_{E} auf den Motor 5 Abhängigkeiten von der nichtlinearen Unterstützungskennlinie 8. Hierdurch lässt sich stets die gleiche Dynamik realisieren, die unabhängig von der Servounterstützung ist. Zudem wird eine gute Wahrnehmbarkeit der Lenkempfehlung erzielt.

Ferner kann für den Fall, dass der Fahrer das Lenkrad loslässt, ein merkliches Eindrehen desselben verhindert werden, da in dieser Situation weder das Signal sₒ noch das Signal s_{H} eine Komponente für das Unterstützungsmoment M_{U} beisteuern.

Die Erfindung wurde vorstehend anhand eines bevorzugten Ausführungsbeispiels näher erläutert. Sie ist jedoch nicht auf dieses beschränkt, sondern umfasst alle durch die Patentansprüche definierten Ausgestaltungen.

### Bezugszeichenliste

- 1: elektromechanische Lenkung
- 2: Lenkrad
- 3: Lenksäule
- 4: Lenkgetriebe
- 5: Aktuator (z. B. Elektromotor)
- 6: Lenkmomentsensor (Handmomentsensor)
- 7: Lenkungssteuergerät
- 8: Unterstützungskennlinie
- 9: Bremsensteuergerät
- 10: Schnittstelle
- 11: Summationseinrichtung
- 12: Summationseinrichtung
- 13: Kennlinie Offsetsignal sₒ
- 14: Vergleichseinrichtung
- 15: Richtungserfassung des Lenkbefehls
- k: Faktor
- nᵢ: Raddrehzahl
- s_{E}: Lenkempfehlungssignal
- s_{H}: Signal des Handmoments M_{H}
- s_{H•}: modifiziertes Signal des Handmoments
- sₒ: Offsetsignal für das Handmoment
- s_{U}: Stellsignal
- v: Fahrgeschwindigkeit
- M_{E}: Lenkempfehlung
- M_{H}: fahrerseitiges Handmoment
- M_{U}: Unterstützungsmoment
- δ_{F}: Lenkwinkel
- ω: Gierrate

## Patentansprüche

1. Elektromechanische Lenkung mit einer Lenkempfehlung zur Stabilisierung eines Fahrzeugs in einer stabilitätskritischen Fahrsituation, die am Lenkrad (2) als Moment haptisch zur Anzeige bringbar ist, umfassend:
- einen Motor (5) zur Bereitstellung eines Unterstützungsmoments (M_{U}) in Abhängigkeit eines Stellsignals (s_{U}), und
- eine Einrichtung zur Generierung eines modifizierten Signals (s_{H*}) aus einem Lenkbefehlsignal (s_{H}) mittels einer in dieser Einrichtung abgelegten Zuordnungsvorschrift zur Vorgabe des Ausmaßes der Lenkunterstützung, und
- eine Einrichtung zur Bereitstellung eines eine Lenkempfehlung (M_{E}) repräsentierenden Signals (s_{E}), welches aus erfassten Fahrzeugparametern ermittelt wird,
**dadurch gekennzeichnet, dass**
das die Lenkempfehlung (M_{E}) repräsentierende Signal (s_{E}) und das im Hinblick auf das Ausmaß der Lenkunterstützung modifizierte Signal (s_{H*}) nach der Generierung des modifizierten Signals (s_{H*}) addiert werden, um das Stellsignal (s_{U}) zu bilden, welches dem Motor (5) aufgeschaltet ist.

2. Elektromechanische Lenkung nach Anspruch 1, **dadurch gekennzeichnet, dass** ein Offsetsignal (sₒ) generiert wird, wenn die Lenkempfehlung (M_{E}) dem Lenkbefehl (M_{H}) am Lenkrad entgegengewirkt, und dass das Offsetsignal (sₒ) dem Signal des Lenkbefehls (s_{H}) aufgeschaltet ist.

3. Elektromechanische Lenkung nach Anspruch 1 oder 2, **dadurch gekennzeichnet, dass** das Lenkbefehlsignal (s_{H}) das am Lenkrad (2) anliegende Handmoment (M_{H}) repräsentiert.

4. Elektromechanische Lenkung nach einem der Ansprüche 1 bis 3, **dadurch gekennzeichnet, dass** das Offsetsignal (sₒ) aus dem Lenkbefehlsignal (s_{H}) über eine vorgegebene Zuordnungsvorschrift, insbesondere eine Kennlinie bestimmt wird.

5. Elektromechanische Lenkung nach einem der Ansprüche 1 bis 3, **dadurch gekennzeichnet, dass** eine Vergleichseinrichtung (14) vorgesehen ist, welche die Vorzeichen des Lenkbefehls und der Lenkempfehlung auswertet und einen mit dem Offsetsignal (sₒ) multiplikativ verknüpften Faktor (k) generiert, der bei ungleichen Vorzeichen 1, ansonsten hingegen 0 beträgt.

6. Elektromechanische Lenkung nach Anspruch 5, **dadurch gekennzeichnet, dass** eine Summationsvorrichtung (12) vorgesehen ist, der eingangsseitig das Lenkbefehlsianal (s_{H}) und das mit dem Faktor (k) multiplizierte Offsetsignal (sₒ) aufgeschaltet sind, und deren und das mit dem Faktor (k) multiplizierte Offsetsignal (sₒ) aufgeschaltet sind, und deren Ausgangssignal auf eine Einrichtung (8) zur Generierung des Stellsignals (s_{U}) aufgeschaltet ist.

7. Elektromechanische Lenkung nach einem der Ansprüche 1 bis 6, **dadurch gekennzeichnet, dass** die elektromechanische Lenkung (1) mit einem ESP zusammenwirkt und die Lenkempfehlung außerhalb der Lenkung, vorzugsweise in dem ESP generiert wird.

8. Elektromechanische Lenkung nach einem der Ansprüche 1 bis 7, **dadurch gekennzeichnet, dass** Signal der Lenkempfehlung (s_{E}) derart eingestellt ist, dass das hieraus generierte Unterstützungsmoment des Motors bei Geradeausfahrt an den Fahrzeugrädern eine Lenkwinkelveränderung von maximal +/- 3° erzeugt.

## Claims

1. Electromechanical steering system with a steering recommendation for stabilizing a vehicle in a driving situation which is critical for stability, which steering recommendation can be indicated haptically as a torque at the steering wheel (2), comprising:
- a motor (5) for making available an assistance torque (Mᵤ) as a function of an actuation signal (Sᵤ), and
- a device for generating a modified signal (S_{H}^{*}) from a steering command signal (S_{H}) by means of an assignment rule which is stored in this device and has the purpose of predefining the extent of the steering assistance, and
- a device for making available a signal (S_{E}) which represents a steering recommendation (M_{E}) and which is determined from detected vehicle parameters,
**characterized in that**
the signal (S_{E}) which represents the steering recommendation (M_{E}) and the signal (S_{H}^{*}) which is modified with respect to the extent of the steering assistance are added after the generation of the modified signal (S_{H}^{*}) in order to form the actuation signal (S_{U}) which is applied to the motor (5).

2. Electromechanical steering system according to Claim 1, **characterized in that** an offset signal (Sₒ) is generated if the steering recommendation (M_{E}) counteracts the steering command (M_{H}) at the steering wheel, and that the offset signal (Sₒ) is applied to the signal of the steering command (S_{H}).

3. Electromechanical steering system according to Claim 1 or 2, **characterized in that** the steering command signal (S_{H}) represents the manual torque (M_{H}) applied to the steering wheel (2).

4. Electromechanical steering system according to one of Claims 1 to 3, **characterized in that** the offset signal (Sₒ) is determined from the steering command signal (S_{H}) by means of a predefined assignment rule, in particular a characteristic curve.

5. Electromechanical steering system according to one of Claims 1 to 3, **characterized in that** a comparator device (14) is provided which evaluates the signs of the steering command and steering recommendation and generates a factor (k) which is multiplicatively linked to the offset signal (Sₒ) and which is 1 in the case of unequal sign but otherwise 0.

6. Electromechanical steering system according to Claim 5, **characterized in that** a summing device (12) is provided, to which on the input side the steering command signal (S_{H}) and the offset signal (Sₒ) multiplied by the factor (k) are applied, and whose output signal is applied to a device (8) for generating the actuation signal (S_{U}).

7. Electromechanical steering system according to one of Claims 1 to 6, **characterized in that** the electromechanical steering system (1) interacts with an ESP, and the steering recommendation is generated outside the steering system, preferably in the ESP.

8. Electromechanical steering system according to one of Claims 1 to 7, **characterized in that** the signal of the steering recommendation (S_{E}) is set in such a way that the assistance torque of the motor which is generated herefrom gives rise to a steering angle change of at maximum +/- 3° at the vehicle, wheels in the case of straight-ahead travel.

## Revendications

1. Direction électromécanique avec une recommandation de direction en vue de stabiliser un véhicule dans une situation de conduite critique pour la stabilité, laquelle peut être appliquée au volant de direction (2) pour indication de manière sensorielle sous la forme d'un couple, comprenant :
- un moteur (5) pour délivrer un couple d'assistance (M_{U}) en fonction d'un signal de commande (S_{U}), et
- un dispositif pour générer un signal modifié (S_{H}*) à partir d'un signal d'instruction de direction (S_{H}) au moyen d'une prescription d'affectation stockée dans ce dispositif en vue de prédéfinir une amplitude d'assistance à la direction, et
- un dispositif pour délivrer un signal (S_{E}) représentant une recommandation de direction (M_{E}), lequel est déterminé à partir de paramètres captés du véhicule,
**caractérisée en ce que**
le signal (S_{E}) qui représente la recommandation de direction (M_{E}) et le signal modifié (S_{H}*) dans la perspective de l'amplitude d'assistance à la direction sont additionnés après la génération du signal modifié (S_{H}*) afin de former le signal de commande (S_{U}) qui est appliqué au moteur (5).

2. Direction électromécanique selon la revendication 1, **caractérisée en ce qu'**un signal de décalage (S_{O}) est généré lorsque la recommandation de direction (M_{E}) s'oppose à l'instruction de direction (M_{H}) au niveau du volant de direction, et **en ce que** le signal de décalage (Sₒ) est superposé au signal d'instruction de direction (S_{H}).

3. Direction électromécanique selon la revendication 1 ou 2, **caractérisée en ce que** le signal d'instruction de direction (S_{H}) représente le couple manuel (M_{H}) appliqué au volant de direction (2).

4. Direction électromécanique selon l'une des revendications 1 à 3, **caractérisée en ce que** le signal de décalage (Sₒ) est déterminé à partir du signal d'instruction de direction (S_{H}) par le biais d'une prescription d'affectation prédéfinie, notamment une courbe caractéristique.

5. Direction électromécanique selon l'une des revendications 1 à 3, **caractérisée en ce qu'**il est prévu un dispositif de comparaison (14) qui interprète le signe de l'instruction de direction et de la recommandation de direction et génère un facteur (k) combiné par multiplication avec le signal de décalage (Sₒ), lequel est égal à 1 si les signes sont différents, sinon par contre est égal à 0.

6. Direction électromécanique selon la revendication 5, **caractérisée en ce qu'**il est prévu un dispositif totalisateur (12) à l'entrée duquel est appliqué le signal d'instruction de direction (S_{H}) ainsi que le signal de décalage (Sₒ) multiplié par le facteur (k) et dont le signal de sortie est appliqué à un dispositif (8) pour générer le signal de commande (S_{U}).

7. Direction électromécanique selon l'une des revendications 1 à 6, **caractérisée en ce que** la direction électromécanique (1) interagit avec un ESP et la recommandation de direction est générée en dehors de la direction, de préférence dans l'ESP.

8. Direction électromécanique selon l'une des revendications 1 à 7, **caractérisée en ce que** le signal de recommandation de direction (S_{E}) est réglé de telle sorte que le couple d'assistance du moteur généré à partir de celui-ci produit, lors d'un déplacement en ligne droite, une modification de l'angle de direction de maximum ±3° au niveau des roues du véhicule.
